# EUROPÄISCHE PATENTSCHRIFT

(11) **EP 0 849 146 B1**
(45) Veröffentlichungstag und Bekanntmachung des Hinweises auf die Patenterteilung: **13.06.2001**
(21) Anmeldenummer: 97119195.2
(22) Anmeldetag: 03.11.1997
(51) Int. Cl.: B62D 35/00

(54) **Kraftfahrzeug, insbesondere Personenkraftwagen mit Heckspoiler und zusätzlicher Bremsleuchte**
Vehicle, especially motor vehicle, with a rear spoiler and additional brake light
Véhicule automobile, en particulier véhicule de passagers, avec un feu de signalisation suplémentaire dans le becquet arrière

(30) Priorität: 18.12.1996 DE 19652692
(43) Veröffentlichungstag der Anmeldung: 24.06.1998
(73) Patentinhaber: Dr.Ing.h.c. F. Porsche Aktiengesellschaft, 70435 Stuttgart (DE)
(72) Erfinder: Klatt, Joachim, 75446 Wiernsheim (DE); Appel, Manfred, 75417 Mühlacker (DE)

(56) Entgegenhaltungen:
- DE-A- 3 735 185
- JP-A- 2 120 195
- US-A- 5 119 068

## Beschreibung

Die Erfindung betrifft ein Kraftfahrzeug, insbesondere Personenkraftwagen, mit einer im Heckbereich angeordneten, von einer eingefahrenen Ruhestellung in eine ausgefahrene Betriebsstellung verlagerbaren Luftleitvorrichtung und wenigstens einer zusätzlichen Bremsleuchte.

Bei einem bekannten coupeartigen Kraftfahrzeug (Porsche 911 Carrera) mit einer heckseitig angeordneten ausfahrbaren Luftleitvorrichtung ist am oberen Rand der Heckscheibe eine eine Verlängerung der vorgelagerten Dachkontur bildende, querverlaufende Abdeckblende angeordnet, in der etwa mittig eine langgestreckte zusätzliche Bremsleuchte aufgenommen ist.

Bei der Cabrio- bzw. Targa-Version desselben Personenkraftwagens ist anstelle der querverlaufenden, heckscheibenseitigen Abdeckblende oberhalb der ausfahrbaren Luftleitvorrichtung am Heckdeckel ein aufgesetzter, nach oben hin vorstehender Haltebügel vorgesehen, der die zusätzliche Bremsleuchte aufnimmt.

Die gattungsgemäße JP 2-120 195 A behandelt ein Kraftfahrzeug mit einer im Heckbereich angeordneten Luftleitvorrichtung, die von einer ersten Stellung in eine ausgefahrene zweite Stellung verlagerbar ist. Im hinteren Bereich der Luftleitvorrichtung ist eine schwenkbare Klappe vorgesehen, die beim Bremsen des Kraftfahrzeuges mittels einer Verstelleinrichtung in eine hochgestellte Lage verschwenkt wird. In dieser Lage ist eine an der Rückseite der Luftleitvorrichtung angeordnete Bremsleuchte sichtbar.

Nachteilig an diesen beiden Ausführungen ist, daß für die Coupe-Version einerseits und für die Cabrio- bzw. Targa-Version andrerseits jeweils unterschiedlich ausgebildete Zusatzbauteile zur Aufnahme der zusätzlichen Bremsleuchten vorgesehen werden müssen, was hohe Kosten zur Folge hat.

Aufgabe der Erfindung ist es, an einem Heckbereich eines mit einer ausfahrbaren Luftleitvorrichtung versehenen Kraftfahrzeuges eine zusätzliche Bremsleuchtenanordnung zu schaffen, die bei reduzierten Kosten für unterschiedliche Karosserie-Varianten verwendbar ist.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung von zwei getrennt voneinander angneordneten zusätzlichen Bremsleuchten im Heckbereich - eine der Luftleitvorrichtung vorgelagert, die andere am hinteren Randbereich der Luftleitvorrichtung - eine Bremsleuchtenanordnung geschaffen wird, die bei reduzierten Kosten für unterschiedliche Karosserie-Varianten mit ausfahrbarer Luftleitvorrichtung anwendbar ist, so daß auf kostenintensive, zusätzliche Abdeckblenden bzw. aufgesetzte Haltebügel verzichtet werden kann.

Die erste zusätzliche Bremsleuchte ist in eine Ausnehmung einer nischenartigen Einprägung eines feststehenden Heckmittelteils bzw. eines Verdeckkastendeckels eingesetzt und dort in Lage gehalten. Die zweite zusätzliche Bremsleuchte ist an der querverlaufenden Hinterseite der ausfahrbaren Luftleitvorrichtung angeordnet und zwar in einer nischenförmigen Aufnahme der Luftleitvorrichtung. In der eingefahrenen Ruhestellung der Luftleitvorrichtung ist die vorgelagerte erste Bremsleuchte geschaltet, wogegen die zweite Bremsleuchte durch den Motordeckel verdeckt ist. Beim Ausfahren der Luftleitvorrichtung ist ab einer Zwischenstellung die zweite Bremsleuchte geschaltet, da die erste Bremsleuchte durch die Luftleitvorrichtung verdeckt ist.

Ein Ausführungsbeispiel der Erfindung ist in der Zeichnung dargestellt und wird im folgenden näher erläutert.

Es zeigen
- Fig. 1: eine perspektivische Teilansicht von schräg hinten auf den Heckbereich einer Coupe-Version eines Personenkraftwagens mit einer ausfahrbaren Luftleitvorrichtung,
- Fig. 2: einen Schnitt nach der Linie II-II der Fig. 1, wobei die ausfahrbare Luftleitvorrichtung ihre eingefahrene Ruhestellung einnimmt,
- Fig. 3: einen Schnitt entsprechend Fig. 2, wobei die Luftleitvorrichtung eine ausgefahrene Zwischenstellung B einnimmt, in der ihr oberer Rand die untere Begrenzungslinie des gesetzlich vorgeschriebenen Abstrahlbereichs tangiert,
- Fig. 4: einen Schnitt entsprechend Fig. 2, wobei die Luftleitvorrichtung ihre vollständig ausgefahrene Betriebsstellung einnimmt und die zweite Bremsleuchte an der Luftleitvorrichtung die vorgelagerte erste Bremsleuchte verdeckt,
- Fig. 5: eine perspektivische Teilansicht von schräg hinten auf den Heckbereich einer Cabrio-Version des Personenkraftwagens mit einer ausfahrbaren Luftleitvorrichtung,
- Fig. 6: ein Schaltbild einer ersten Ausführungsform der Beschaltung zur Ansteuerung der zusätzlichen Bremsleuchte und
- Fig. 7: ein Schaltbild einer zweiten Ausführungsform der Beschaltung zur Ansteuerung der zusätzlichen Bremsleuchte.

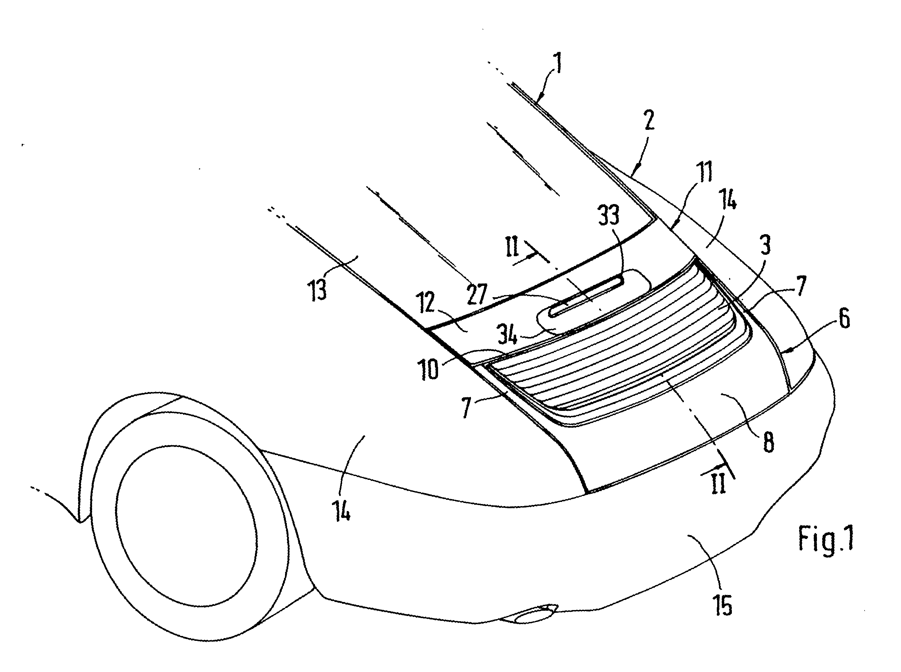

Die in Fig. 1 dargestellte Coupe-Version eines Personenkraftwagens 1 umfaßt im Heckbereich 2 eine ausfahrbare Luftleitvorrichtung 3, die mittels einer Antriebsvorrichtung 4 von einer eingefahrenen Ruhestellung A über Zwischenstellungen B in eine vollständig ausgefahrene Betriebsstellung C verlagerbar ist und umgekehrt.

Die Luftleitvorrichtung 3 ist in eine großflächige Einprägung 5 eines Heckdeckels 6 eingesetzt und verläuft in der Ruhestellung A etwa außenhautbündig zu seitlichen Schenkeln 7 und einer hinteren Kontur 8 des Heckdeckels 6. Die Vorderkante 9 der Luftleitvorrichtung 3 bildet den vorderen Rand des Heckdeckels 6 und verläuft unter Bildung eines schmalen Spaltes 10 zum angrenzenden Aufbauteil 11, das gemäß Fig. 1 durch ein feststehendes Heckmittelteil 12 gebildet wird. Dem Heckmittelteil 12 vorgelagert erstreckt sich eine feststehende Heckscheibe 13.

Beiderseits der Heckscheibe 13, des Heckmittelteils 12 und des Heckdeckels 6 erstrecken sich hintere Seitenteile 14. Der untere Rand des Heckdeckels 6 und der Seitenteile 14 schließen an ein elastisches Heckendteil 15 an.

Die aus zwei Kunststoffschalen 16, 17 zusammengesetzte Luftleitvorrichtung 3 ist an ihrem oberen Rand über zwei beabstandet angeordnete Scharniere 18 mit dem darunterliegenden Heckdeckel 6 gelenkig verbunden.

In einem weiter hintenliegenden Bereich der Luftleitvorrichtung 4 greift an der inneren Kunststoffschale 17 das bewegbare Ende 19 eines Ausstellers 20 der Antriebseinrichtung 4 an. Der Aussteller 20 bewegt sich bei der Ausfahrbewegung der Luftleitvorrichtung entlang einer kreisbogenförmigen Bahn nach oben und nach hinten. Jedes Scharnier 18 umfaßt eine spoilerfeste Konsole 21, an der zwei beabstandete Lenker 22, 23 mit ihren einen Enden drehbar gelagert sind. Die anderen Enden der beiden eine Viergelenkanordnung bildenden Lenker 22, 23 sind mit einem langgestreckten, abgekröpften Arm 24 drehbar verbunden. Das freie Ende des Armes 24 ist gelenkig mit einem Lagerbock 25 verbunden, der deckelfest angebracht ist.

Durch die besondere Ausbildung der beiden Scharniere 18 wird verhindert, daß die Vorderkante 9 der Luftleitvorrichtung 4 beim Ausfahrvorgang zu früh nach oben hin ansteigt und in den Abstrahlbereich 26 der vorgelagerten ersten zusätzlichen Bremsleuchte 27 hineinragt.

Die außenliegende Kunststoffschale 16 ist nach Art eines Lufteintrittsgitters mit querverlaufenden Lamellen 30 ausgebildet, wobei durch einen an der Innenseite des Heckdeckels 6 angeordneten, nicht näher dargestellten Lüfter von der Fahrzeugaußenseite her Luft durch das Lufteintrittsgitter und eine am Heckdeckel 6 vorgesehene Öffnung nach innen angesaugt wird. Der hintere Randbereich 28 der ausgestellten Luftleitvorrichtung 4 ist über ein zieharmonikaartiges Abdeckelement 31 mit einem Flansch 32 des Heckdeckels 6 verbunden.

Erfindungsgemäß ist an dem unmittelbar an die Vorderkante 9 der heckseitigen Luftleitvorrichtung 4 anschließenden Aufbauteil 11 die erste langgestreckte, zusätzliche Bremsleuchte 27 und in einem querverlaufenden, hinteren Randbereich 28 der ausfahrbaren Luftleitvorrichtung 4 eine zweite, zusätzliche Bremsleuchte 29 vorgesehen, wobei je nach Stellung der Luftleitvorrichtung 4 zumindest die gerade von hinten sichtbare Bremsleuchte 27 bzw. 29 geschaltet ist.

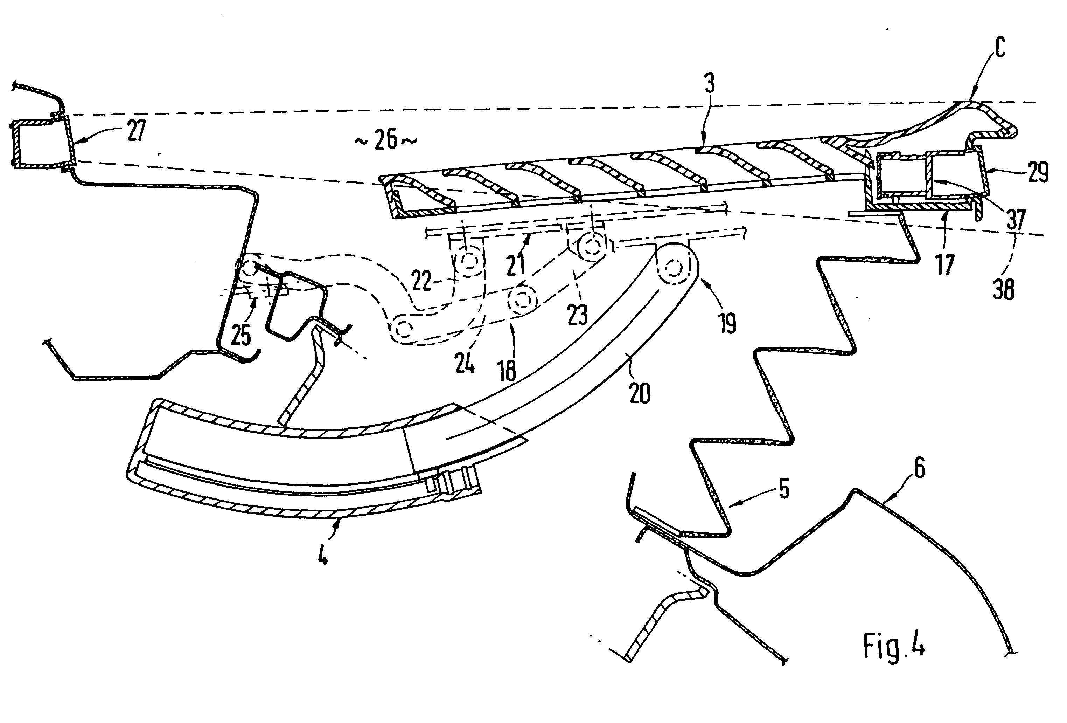

Die erste zusätzliche Bremsleuchte 27 ist gemäß den Fig. 1 bis 4 in eine Ausnehmung 33 einer nischenartigen Einprägung 34 des feststehenden Heckmittelteils 12 eingesetzt und dort mittels nicht näher dargestellter Befestigungselemente in Lage gehalten.

Im Ausführungsbeispiel ist die Ausnehmung 33 an einem aufrecht ausgerichteten Wandabschnitt 35 der nischenförmigen Einprägung 34 angeordnet.

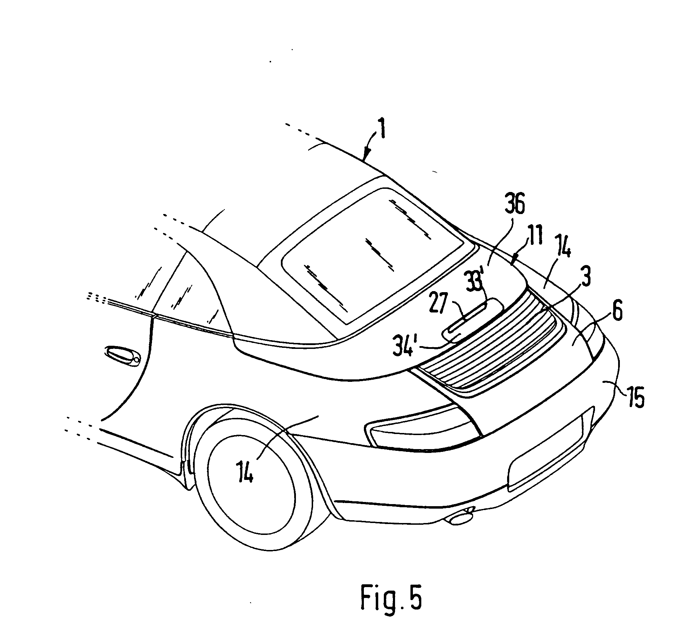

Bei der in Fig. 5 dargestellten zweiten Karosserie-Version des Personenkraftwagens 1, nämlich der Cabrio-Version, ist die erste zusätzliche Bremsleuchte 27 in eine Ausnehmung 33' einer nischenartigen Einprägung 34' eines Verdeckkastendeckels 36 eingesetzt und dort in Lage gehalten. Die fahrzeugseitige Einbaulage und die Ausbildung der nischenartigen Einprägung 34, 34', der Ausnehmung 33, 33' sowie der ersten Bremsleuchten 27 sind bei beiden Ausführungsformen (Coupe-Version und Cabrio-Version) identisch.

Die zweite zusätzliche Bremsleuchte 29 ist in eine an der Hinterseite der ausfahrbaren Luftleitvorrichtung 3 angeordnete, nischenförmige Aufnahme 37 eingesetzt, wobei die Aufnahme 37 an der inneren Kunststoffschale 17 der Luftleitvorrichtung 3 ausgebildet ist.

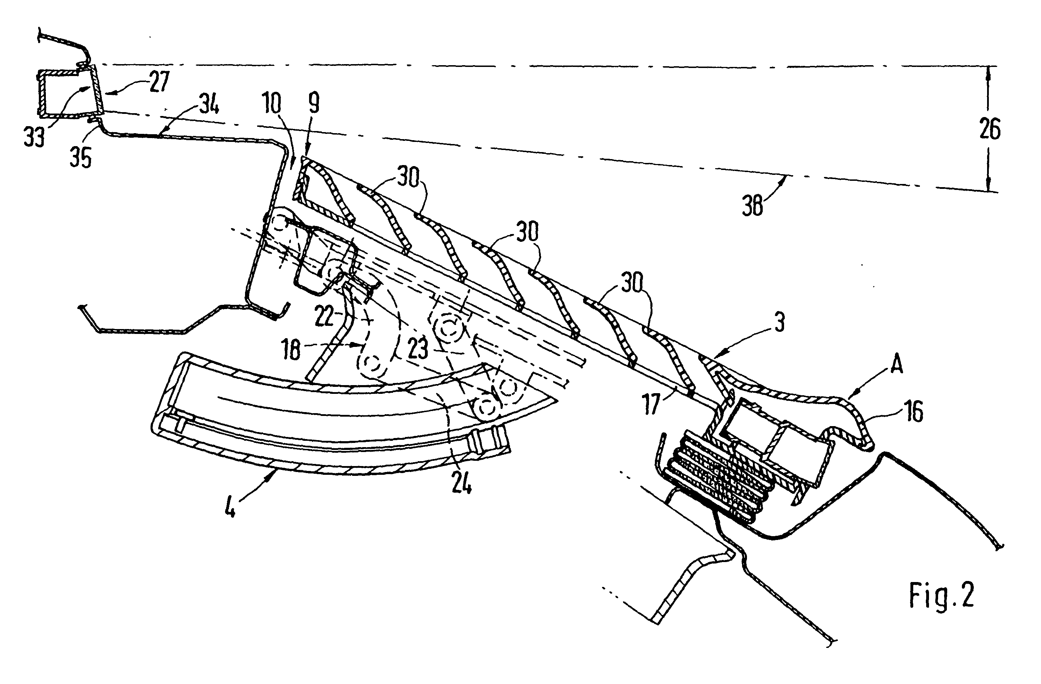

In der eingefahrenen Ruhestellung A der Luftleitvorrichtung 3 ist die zweite zusätzliche Bremsleuchte 29 verdeckt und von der Fahrzeugaußenseite her nicht sichtbar (Fig. 2). In dieser Stellung der Luftleitvorrichtung 3 ist nur die erste zusätzliche Bremsleuchte 27 geschaltet.

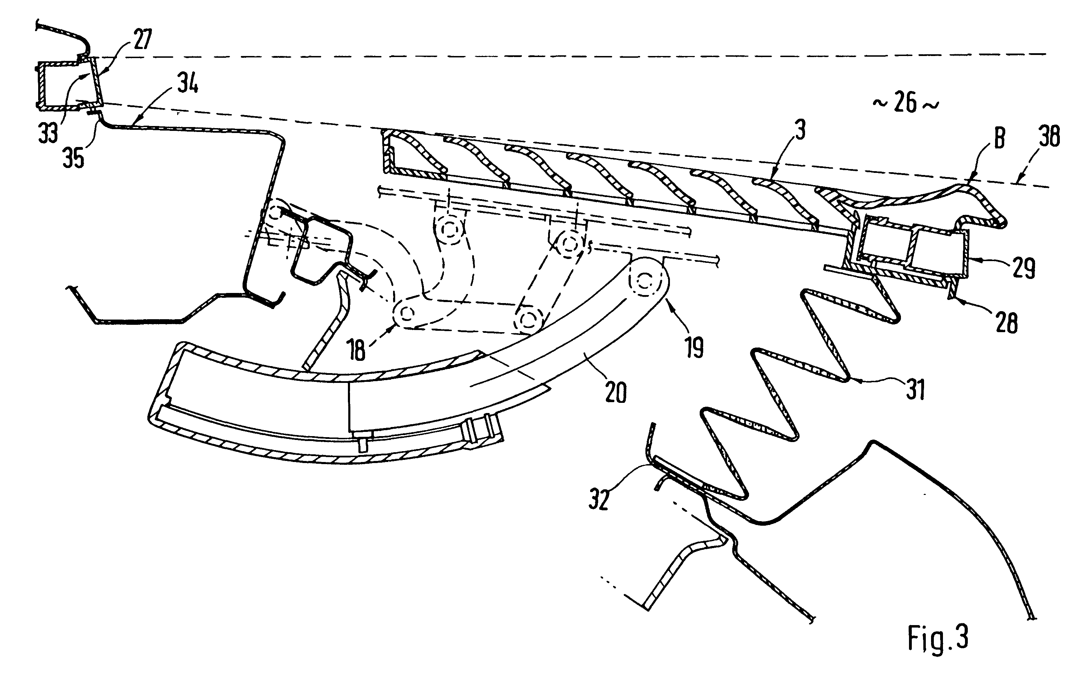

In Fig. 3 ist eine Zwischenstellung B der Luftleitvorrichtung 3 dargestellt, wobei die Vorderkante 9 der Luftleitvorrichtung 3 gerade die untere Begrenzungslinie 38 des gesetzlich vorgeschriebenen Abstrahlbereichs 26 tangiert. Ab dieser Zwischenstellung B muß zumindest einer der beiden Bremsleuchten 27, 29 geschaltet sein oder aber es kann ab dieser Zwischenstellung B ein Umschalten zwischen beiden Bremsleuchten 27, 29 erfolgen.

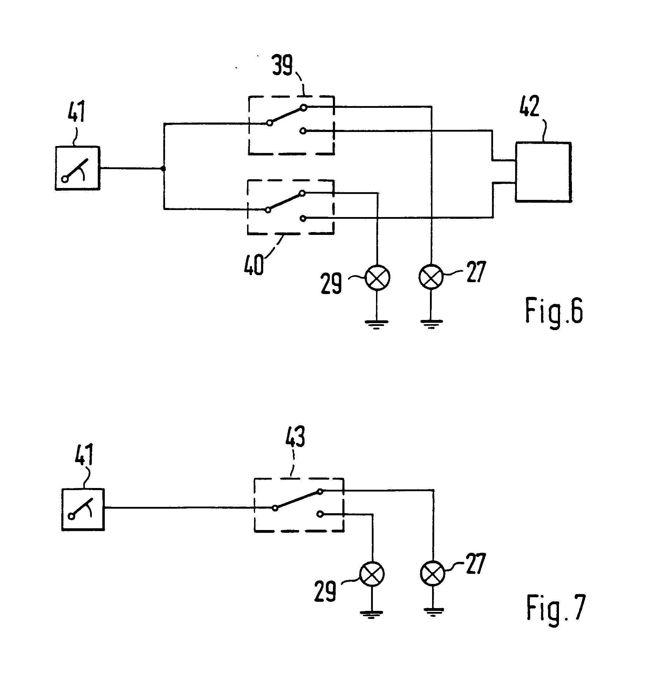

Die Figuren 6 und 7 zeigen zwei alternativ mögliche Beschaltungen zur Ansteuerung der zusätzlichen Bremsleuchte. Fig. 6 zeigt eine Beschaltung, bei der während der Bewegungsphase der Luftleitvorrichtung 3 beide Bremsleuchten 27, 29 bei einem Bremsvorgang bestromt sind. Dem gegenüber zeigt Fig. 7 eine Beschaltung, bei der bei einem Bremsvorgang und bewegter Luftleitvorrichtung 3 nur eine der beiden zusätzlichen Bremsleuchten 27 bzw. 29 bestromt ist und eine Umschaltung zwischen den beiden Bremsleuchten 27, 29 während der Bewegung der Luftleitvorrichtung 3 erfolgt.

Die Fig. 6 zeigt eine erste, karosseriefeste angeordnete Bremsleuchte 27 sowie eine zweite, an der Luftleitvorrichtung 3 angeordnete Bremsleuchte 29. Ein erster Schalter 39 überwacht die Betriebsstellung C der Luftleitvorrichtung 3, während ein zweiter Schalter 40 die Ruhestellung A der Luftleitvorrichtung 3 überwacht. Das Signal zur Bestromung der Bremsleuchten 27, 29 wird von einem an sich bekannten Bremslichtschalter 41 geliefert, mit dem die Schalter 39, 40 eingangsseitig verbunden sind. Ausgangsseitig sind die Ruhekontakte auf die Bremsleuchten 27, 29 geführt, während die Arbeitskontakte zu einem Steuergerät 42 zur Steuerung der Bewegung der Luftleitvorrichtung 3 führen. Der erste Schalter 39 ist in seiner Arbeitsstellung, wenn die Luftleitvorrichtung 3 ihre Betriebsstellung C, erreicht hat. Ansonsten befindet sich der erste Schalter 39 in seiner Ruhestellung. Der zweite Schalter 40 geht in seine Arbeitsstellung über, sobald die Luftleitvorrichtung 3 ihre Ruhestellung A erreicht hat und nimmt anderenfalls seine Ruhestellung ein. Die dargestellte Schaltung wirkt in der Weise, daß durch die Schalter 39, 40 die jeweils zugeordnete Bremsleuchte 27, 29 dann nicht mehr mit dem Bremslichtschalter 41 verbunden ist, wenn der jeweilige Schalter 39, 40 in seiner Arbeitsstellung geht. Somit wird die erste Bremsleuchte 27 genau dann ausgeschaltet, wenn die Luftleitvorrichtung 3 ihre Betriebsstellung C erreicht und die zweite Bremsleuchte 29 wird genau dann ausgeschaltet, wenn die Luftleitvorrichtung 3 ihre Ruhestellung A erreicht. Während der Bewegung der Luftleitvorrichtung 3 leuchten demnach beiden Bremsleuchten 27, 29 gleichzeitig auf, sofern ein Signal des Bremslichtschalters 41 anlegt.

In der Beschaltung nach Fig. 2 ist demgegenüber nur ein einziger Schalter 43 vorgesehen. Dieser ist so an der Luftleitvorrichtung 3 oder an einem den Bewegungen der Luftleitvorrichtung 3 folgenden Bauteil angeordnet, daß er genau dann in seine Arbeitsstellung wechselt, wenn die Luftleitvorrichtung 3 das Lichtbündel der ersten Bremsleuchte 27 abzuschatten beginnt. Dieser dritte Schalter 43 ist eingangsseitig mit dem Bremslichtschalter 41 verbunden. Ausgangsseitig ist die erste Bremsleuchte 27 auf den Ruhekontakt und die zweite Bremsleuchte 29 auf den Arbeitskontakt geschaltet. So lange sich die Luftleitvorrichtung 3 oberhalb des Umschaltpunktes des Schalters 43 befindet, ist die zweite Bremsleuchte 29 über den Arbeitskontakt mit dem Bremslichtschalter 41 verbunden. Befindet sich die Luftleitvorrichtung 3 hingegen unterhalb des Umschaltpunktes, so befindet sich der Schalter 43 in seiner Ruhestellung und die erste Bremsleuchte 27 ist mit dem Bremslichtschalter 41 verbunden.

## Patentansprüche

1. Kraftfahrzeug, insbesondere Personenkraftwagen, mit einer im Heckbereich angeordneten, von einer eingefahrenen Ruhestellung in eine ausgefahrene Betriebsstellung verlagerbaren Luftleitvorrichtung und wenigstens einer zusätzlichen Bremsleuchte, dadurch gekennzeichnet, daß an einem unmittelbar an die Vorderkante (9) der heckseitigen Luftleitvorrichtung (3) anschließenden Aufbauteil (11) eine erste zusätzliche Bremsleuchte (27) und an einen querverlaufenden hinteren Randbereich (28) der ausfahrbaren Luftleitvorrichtung (3) eine zweite zusätzliche Bremsleuchte (29) vorgesehen sind, wobei je nach Stellung der heckseitigen Luftleitvorrichtung (3) zumindest die gerade von hinten sichtbare Bremsleuchte (27, 29) geschaltet ist.

2. Kraftfahrzeug nach Anspruch 1, dadurch gekennzeichnet, daß die erste zusätzliche Bremsleuchte (27) in eine Ausnehmung (33) einer nischenartigen Einprägung (34) eines feststehenden Heckmittelteils (12) eingesetzt und dort in Lage gehalten ist.

3. Kraftfahrzeug nach Anspruch 1, dadurch gekennzeichnet, daß die erste zusätzliche Bremsleuchte (27) in eine Ausnehmung (33') einer nischenartigen Einprägung (34') eines Verdeckkastendeckels (36) eingesetzt und dort in Lage gehalten ist.

4. Kraftfahrzeug nach Anspruch 1, dadurch gekennzeichnet, daß die zweite zusätzliche Bremsleuchte (29) in eine an der Hinterseite der ausfahrbaren Luftleitvorrichtung (3) angeordnete Aufnahme (37) eingesetzt ist.

5. Kraftfahrzeug nach den Ansprüchen 1 und 4, dadurch gekennzeichnet, daß die zweite zusätzliche Bremsleuchte (29) in eingefahrener Ruhestellung (A) der heckseitigen Luftleitvorrichtung (3) verdeckt ist.

6. Kraftfahrzeug nach einem oder mehreren der vorangegangenen Ansprüche, dadurch gekennzeichnet, daß in der eingefahrenen Ruhestellung (A) der heckseitigen Luftleitvorrichtung (3) die erste zusätzliche Bremsleuchte (27) geschaltet ist.

7. Kraftfahrzeug nach einem oder mehreren der vorangegangenen Ansprüche, dadurch gekennzeichnet, daß beim Ausfahren der heckseitigen Luftleitvorrichtung (3) ab einer Zwischenstellung B die erste Bremsleuchte (27) durch die ausgefahrene Luftleitvorrichtung (3) verdeckt ist.

8. Kraftfahrzeug nach einem oder mehreren der vorangegangenen Ansprüche, dadurch gekennzeichnet, daß sowohl die erste Bremsleuchte (27) als auch die zweite Bremsleuchte (29) beim Bremsvorgang angesteuert werden, wenn sich die Luftleitvorrichtung (3) in einer Stellung zwischen der eingefahrenen Ruhestellung (A) und einer vollständig ausgefahrenen Betriebsstellung (C) befindet.

9. Kraftfahrzeug nach Anspruch 8, dadurch gekennzeichnet, daß in der Ruhestellung (A) nur die erste Bremsleuchte (27) und in der Betriebsstellung (C) nur die zweite Bremsleuchte (29) angesteuert ist.

10. Kraftfahrzeug nach Anspruch 9, dadurch gekennzeichnet, daß ein erster Schalter (39) zur Überwachung der Betriebsstellung (C) und ein zweiter Schalter (40) zur Überwachung der Ruhestellung (A) vorgesehen sind, wobei die beiden Schalter (39, 40) eingangsseitig mit einem Bremslichtschalter (41) und ausgangsseitig mit den Bremsleuchten (27, 29) verbunden sind und die beiden Schalter (39, 40) die Verbindung zwischen ihrem jeweiligen Eingang und Ausgang unterbrechen, wenn die Luftleitvorrichtung (3) die dem jeweiligen Schalter (39, 40) zugeordnete Stellung (C, A) erreicht hat.

11. Kraftfahrzeug nach einem oder mehreren der Ansprüche 1 bis 7, dadurch gekennzeichnet, daß bei einem Bremsvorgang anstelle der ersten Bremsleuchte (27) die zweite Bremsleuchte (29) angesteuert wird, sobald die Luftleitvorrichtung (3) in ein von der ersten Bremsleuchte (27) abgestrahltes Lichtbündel eintritt.

12. Kraftfahrzeug nach Anspruch 11, dadurch gekennzeichnet, daß ein Umschalter (43) so mit der Lufleitvorrichtung (3) verbunden ist, daß er betätigt wird, wenn die Luftleitvorrichtung (3) in das Lichtbündel der ersten Bremsleuchte eintritt, und der Eingang des Umschalters (4) mit einem Bremslichtschalter (41) und die Ausgänge mit jeweils einer der Bremsleuchten (27, 29) verbunden sind.

## Claims

1. A motor vehicle, in particular a passenger car, having a spoiler device. arranged in the tail region and displaceable from a retracted rest position into an extended operating position, and at least one additional brake light, **characterized in that** a first additional brake light (27) is provided on a body part (11) directly adjoining the front edge (9) of the spoiler device (3) at the tail and a second additional brake light (29) is provided on a transversely extending rear edge region (28) of the retractable spoiler device (3), wherein at least the brake light (27, 29) visible straight from the rear is connected in accordance with the position of the spoiler device (3) at the tail.

2. A motor vehicle according to Claim 1, **characterized in that** the first additional brake light (27) is inserted in a recess (33) in a niche-like impressed portion (34) of a stationary middle part (12) of the tail and is held in position there.

3. A motor vehicle according to Claim 1, **characterized in that** the first additional brake light (27) is inserted in a recess (33') in a niche-like impressed portion (34') of the cover (36) of a folding-top compartment and is held in position there.

4. A motor vehicle according to Claim 1, **characterized in that** the second additional brake light (29) is inserted in a receiving means (37) arranged on the rear side of the extensible spoiler device (3).

5. A motor vehicle according to Claims 1 and 4, **characterized in that** the second additional brake light (29) is covered in the retracted rest position (**A**) of the spoiler device (3) at the tail.

6. A motor vehicle according to one or more of the preceding Claims, **characterized in that** the first additional brake light (27) is connected in the retracted rest position (**A**) of the spoiler device (3) at the tail.

7. A motor vehicle according to one or more of the preceding Claims, **characterized in that** when the spoiler device (3) at the tail is extended from an intermediate position **B** the first brake light (27) is covered by the extended spoiler device (3).

8. A motor vehicle according to one or more of the preceding Claims, **characterized in that** both the first brake light (27) and the second brake light (29) are actuated during braking when the spoiler device (3) is situated in a position between the retracted rest position (**A**) and a completely extended operating position (**C**).

9. A motor vehicle according to Claim 8, **characterized in that** in the rest position (**A**) only the first brake light (27) is actuated and in the operating position (**C**) only the second brake light (29) is actuated.

10. A motor vehicle according to Claim 9, **characterized in that** a first switch (39) is provided for monitoring the operating position (**C**) and a second switch (40) is provided for monitoring the rest position (**A**), wherein the two switches (39, 40) are connected at the input side to a brake-light switch (41) and at the output side to the brake lights (27, 29). and the two switches (39, 40) interrupt the connexion between their respective input and output when the spoiler device (3) has reached the position (**C, A**) associated with the respective switch (39, 40).

11. A motor vehicle according to one or more of Claims 1 to 7, **characterized in that** during braking the second brake light (29) is actuated instead of the first brake light (27) as soon as the spoiler device (3) enters a light beam emitted by the first brake light (27).

12. A motor vehicle according to Claim 11, **characterized in that** a converter (43) is connected to the spoiler device (3) in such a way that it is actuated when the spoiler device (3) enters the light beam of the first brake light, and the input of the converter (43) is connected to a brake-light switch (41) and the outputs are each connected to one of the brake lights (27, 29) respectively.

## Revendications

1. Véhicule automobile, notamment voiture de tourisme, comportant un dispositif de guidage d'air disposé à l'arrière et déplaçable d'une position de repos rentrée à une position de service sortie, ainsi qu'au moins un feu de stop supplémentaire, caractérisé en ce qu'il est prévu un premier feu de stop (27) supplémentaire sur un élément de carrosserie (11) se raccordant directement au bord avant (9) du dispositif de guidage d'air (3) arrière, et un deuxième feu de stop (29) supplémentaire sur une zone de bordure arrière (28), s'étendant transversalement, du dispositif de guidage d'air (3) sorti, au moins le feu de stop (27, 29) directement visible de l'arrière étant en fonction selon la position du dispositif de guidage d'air (3) arrière.

2. Véhicule automobile selon la revendication 1, caractérisé en ce que le premier feu de stop (27) supplémentaire est inséré dans un évidement (33) d'un renfoncement (34) du type niche d'un élément central arrière (12) fixe et y est maintenu en position.

3. Véhicule automobile selon la revendication 1, caractérisé en ce que le premier feu de stop (27) supplémentaire est inséré dans un évidement (33') d'un renfoncement (34') du type niche d'un couvercle (36) du coffre de capote et y est maintenu en position.

4. Véhicule automobile selon la revendication 1, caractérisé en ce que le deuxième feu de stop (29) supplémentaire est inséré dans un logement (37) disposé sur le côté arrière du dispositif de guidage d'air (3) extractible.

5. Véhicule automobile selon les revendications 1 et 4, caractérisé en ce que le deuxième feu de stop (29) supplémentaire est dissimulé en position de repos rentrée (A) du dispositif de guidage d'air (3) arrière.

6. Véhicule automobile selon une ou plusieurs des revendications précédentes, caractérisé en ce qu'en position de repos rentrée (A) du dispositif de guidage d'air (3) arrière, le premier feu de stop (27) supplémentaire est en fonction.

7. Véhicule automobile selon une ou plusieurs des revendications précédentes, caractérisé en ce que lors du mouvement de sortie du dispositif de guidage d'air (3) arrière, à partir d'une position intermédiaire (B), le premier feu de stop (27) est dissimulé par le dispositif de guidage d'air (3) sorti.

8. Véhicule automobile selon une ou plusieurs des revendications précédentes, caractérisé en ce que le premier feu de stop (27) comme le deuxième feu de stop (29) sont commandés lors du freinage, lorsque le dispositif de guidage d'air (3) se trouve dans une position entre la position de repos rentrée (A) et une position de service (C) totalement sortie.

9. Véhicule automobile selon la revendication 8, caractérisé en ce qu'en position de repos (A), seul le premier feu de stop (27) est commandé et en position de service (C), seul le deuxième feu de stop (29) est commandé.

10. Véhicule automobile selon la revendication 9, caractérisé en ce qu'un premier interrupteur (39) est prévu pour le contrôle de la position de service (C), et un deuxième interrupteur (40), pour le contrôle de la position de repos (A), les deux interrupteurs (39, 40) étant reliés côté entrée à un interrupteur d'éclairage de feux de stop (41) et côté sortie, aux feux de stop (27, 29), et les deux interrupteurs (39, 40) interrompant la liaison entre leur entrée et leur sortie respectives, lorsque le dispositif de guidage d'air (3) a atteint la position (C, A) affectée à chaque interrupteur (39, 40).

11. Véhicule automobile selon une ou plusieurs des revendications 1 à 7, caractérisé en ce que lors d'un freinage, le deuxième feu de stop (29) est commandé à la place du premier feu de stop (27), dès que le dispositif de guidage d'air (3) pénètre dans un faisceau lumineux émis par le premier feu de stop (27).

12. Véhicule automobile selon la revendication 11, caractérisé en ce qu'un commutateur (43) est relié au dispositif de guidage d'air (3) de manière à être actionné lorsque le dispositif de guidage d'air (3) pénètre dans le faisceau lumineux du premier feu de stop, et en ce que l'entrée du commutateur (43) est reliée à un interrupteur d'éclairage de feux de stop (41) et les sorties sont reliées chacune à l'un des feux de stop (27, 29).
